# EUROPÄISCHE PATENTSCHRIFT

(11) **EP 1 746 437 B1**
(45) Veröffentlichungstag und Bekanntmachung des Hinweises auf die Patenterteilung: **03.09.2008**
(21) Anmeldenummer: 06015227.9
(22) Anmeldetag: 21.07.2006
(51) Int. Cl.: G01S 13/90

(54) **Synthetik-Apertur-Radar(SAR)-System**
Synthetic Aperture Radar System (SAR)
Système radar à ouverture synthétique

(30) Priorität: 23.07.2005 DE 102005035122
(43) Veröffentlichungstag der Anmeldung: 24.01.2007
(73) Patentinhaber: Deutsches Zentrum für Luft- und Raumfahrt e.V., 51147 Köln (DE)
(72) Erfinder: Runge, Hartmut, Dipl.-Ing., 81377 München (DE); Eineder, Michael, Dr., 81377 München (DE)
(74) Vertreter: von Kirschbaum, Albrecht

(56) Entgegenhaltungen:
- DE-C2- 10 120 536
- US-A- 5 175 554
- US-A- 5 559 515
- US-A- 5 966 092

## Beschreibung

Die Erfindung betrifft ein Synthetik-Apertur-Radar(SAR)-System zur Abbildung von Bodenstreifen mit mehreren, nämlich a Empfangskanälen, von denen jeder mit einem verschiedenen Antennensegment einer a Antennensegmente aufweisenden SAR-Gruppenantenne verbunden ist, die an einer sich über dem Erdboden bewegenden Trägerplattform angebracht ist, wobei die Antennensegmente der SAR-Gruppenantenne für den Empfang der Puls-Echosignale vorher über die SAR-Gruppenantenne ausgesendeter SAR-Impulse räumlich getrennte Phasenzentren aufweisen und somit jeder Empfangskanal einem unterschiedlichen Phasenzentrum zugeordnet ist und die mit jeweils einem der Antennensegmente verbundenen Empfangskanäle einem gemeinsamen SAR-Empfänger zugeteilt sind und nach Art einer Zeitmultiplex-Umschaltung als Zeitmultiplex-Kanäle im SAR-Empfänger betrieben sind.

Einfache SAR-Systeme besitzen nur einen Empfangskanal, der aus Antenne, HF-Verstärker, Mischer, Empfänger, der Digitalisiereinheit und einem Datenspeicher besteht. Die Antenne ist gewöhnlich als Reflektorantenne oder als Planar-Antenne ausgeführt, die zumeist in Antennensegmente eingeteilt ist, deren Hochfrequenzsignale über einen Summierer zusammengefasst werden. Ein Beispiel für diese Technik ist das SAR auf den ERS-Satelliten der ESA.

Weiter fortgeschrittene Systeme wie das ASAR-Instrument auf dem ENVISAT-Satelliten besitzen eine elektronisch phasengesteuerte Antenne, die aus einer Vielzahl von Sende-/Empfangsmodulen besteht und eine Schwenkung des Antennendiagramms erlaubt. Die Hochfrequenzsignale der Empfangseinheiten werden auch hier durch einen Summierer zusammengefasst, so dass letztendlich auch nur ein einziger Empfangskanal vorhanden ist.

Höher entwickelte SAR-Systeme für die SAR-Interferometrie, mit der z.B. Geländemodelle erzeugt oder Meeresströmungen vermessen werden können, erfordern zwei komplett ausgestattete Empfangskanäle und räumlich getrennte Phasenzentren der diesen Kanälen zugeordneten Antennen.

Darüber hinaus sind Mehrkanal-Techniken entwickelt worden, die eine gewünschte Richtcharakteristik der Antenne erst nach der Datenaufnahme mit Hilfe des Signalprozessors erzielen. Hier werden sogenannte Gruppenantennen verwendet, die in der Regel direkt aneinander angrenzend angeordnet sind. Jeder Einzelantenne davon ist ein kompletter Empfangspfad, also einschließlich Mischer, Digitalisierer und Datenspeicher zugeordnet. Die Phasensteuerung der Antenne erfolgt dann durch eine Phasenbeaufschlagung der Mehrkanal-Daten im nachgeschalteten Signalprozessor.

Mehr als zwei Empfangskanäle werden für die Detektion und Messung von bewegten Objekten benötigt, die im Radarbild erst vor dem statischen Hintergrund sichtbar gemacht werden müssen. Für eine solche Anwendung werden mindestens drei Empfangskanäle benötigt. Um den unbewegten Bildhintergrund auszufiltern, werden die Daten eines Empfangskanals von denjenigen der beiden anderen Kanäle subtrahiert. In den Daten dieser beiden Kanäle verbleiben dann nur die Signalanteile der bewegten Objekte, deren Geschwindigkeit durch die sogenannte Along-Track-Interferometrie bestimmt werden kann.

In SAR-Satellitensystemen konnten Multi-Kanal-Gruppenantennen in der Praxis bisher nicht eingesetzt werden, da der Aufwand, also die Kosten, das Gewicht und der Stromverbrauch, für eine ganze Reihe von Empfangseinheiten, in der Regel mindestens drei oder vier Empfangseinheiten, zu groß ist.

Aus US-A-5 175 554 ist ein mehrkanaliges flugzeuggetragenes SAR-System zum Erzeugen von Radar-Landkarten für die Navigation des Flugzeugs und zur Entdeckung von Bodenzielen bei Vorhandensein von elektronischen Gegenmaßnahmen und Rauschstörungen unter Verwendung einer steuerbaren Gruppenantenne bekannt, die vier Quadranten aufweist, deren Phasenzentren vom Phasenzentrum der Gesamtantenne versetzt sind. Die vier Quadranten dienen jedoch zur Bildung einer Monopuls-Antenne, wobei ein erstes Paar Phasenzentren auf der Gierachse der Antenne und das zweite Paar Phasenzentren auf der Nickachse der Antenne liegt. Hier ist jedem Empfangskanal fest und separat jeweils einer der vier Antennenquadranten zugeordnet, die paarweise für den Monopulsbetrieb ein- und abschaltbar sind.

In dem Konferenzpapier "Conceptual Studies for Exploiting the TerraSAR-X Dual Receive Antenna" von J. Mittermayer und H. Runge, IGARSS 2003, Toulouse/France, 21.07.03-25.07.03, IEEE 2003 International Geoscience and Remote Sensing Symposium, IEEE, 2003, findet sich die Beschreibung eines zweikanaligen SAR-Empfangssystems für den deutschen Fernerkundungssatelliten TerraSAR-X. Dieser Satellit verfügt genauso wie der kanadische Radarsat-2 aus Redundanzgründen über zwei vollständige Empfangskanäle. Die vollständige Antenne wird für das Senden verwendet. Zum Empfangen ist die Antenne aber in zwei getrennte Teile im Along-Track aufgeteilt. Die Signale beider Empfangsantennenhälften werden in den beiden Empfangskanälen getrennt detektiert und aufgezeichnet. Mit dieser bekannten SAR-Antenne ist Along-Track-Interferometrie möglich.

Der vorliegenden Erfindung liegt die Aufgabe zu Grunde, eine Technik zu schaffen, mit der ein SAR-Multi-Empfangskanalsystem mit relativ wenig Aufwand realisiert werden kann, wobei auch die bereits erwähnten, über jeweils zwei Empfangskanäle verfügenden Satelliten praktisch ohne zusätzlichen gerätetechnischen Mehraufwand auf drei, vier oder prinzipiell sogar noch mehr Empfangskanäle gebracht werden können. Die vorliegende Erfindung soll dabei nicht nur bei SAR-Satelliten, sondern auch bei SAR-Radargeräten auf anderen Trägerplattformen, wie z.B. Flugzeugen oder Drohnen, eingesetzt werden können.

Gemäß der vorliegenden Erfindung, die sich auf ein Synthetik-Apertur-Radar(SAR)-System der eingangs genannten Art bezieht, wird diese Aufgabe dadurch gelöst, dass über die verschiedenen einzeln ein- und abschaltbaren Antennensegmente besondere Schemata der Amplitudenbelegung der SAR-Gruppenantenne einschaltbar und damit Phasenzentren der SAR-Gruppenantenne verschiebbar sind, wobei die Pulswiederholfrequenz (PRF) des empfangsseitig im Zeitmultiplex betriebenen SAR-Systems im Vergleich zu einem ohne Zeitmultiplex betriebenen SAR-System um den Faktor a heraufgesetzt ist, und dass parallel zwei oder mehr, nämlich b SAR-Empfänger vorgesehen sind, die jeweils einer unterschiedlichen Antennensegmentgruppe der b Antennensegmentgruppen für den Empfang aufweisenden SAR-Gruppenantenne zugeordnet sind, wobei die Antennensegmentgruppen jeweils zwei oder mehr Antennensegmente enthalten.

Nach der vorliegenden Erfindung wird demnach ein Empfänger durch zeitliches Umschalten, das sich als Zeit-Multiplexing bezeichnen lässt, mehrfach genutzt, wodurch sich die Zahl der "virtuellen" Kanäle um den Faktor a erhöht. Für das Multiplexing ist allerdings auch eine Erhöhung der Pulswiederholrate ("Pulse Repetition Rate"; PRF) des SARs um den Faktor a notwendig. Die Einsparung an Hardware, d.h. an baulich tatsächlich vorhandenen Empfangskanälen, wird also durch eine erhöhte Pulswiederholrate PRF erkauft. Wichtig ist, dass weiterhin für jeden Kanal ein anderes Antennenphasenzentrum realisiert wird. Dazu muss die Antennenöffnung (Antennenapertur; antenna aperture) verschoben werden. Dies wird nach der vorliegenden Erfindung durch das Abschalten von Antennensegmenten erreicht. Diese Technik kann auch als Aperturumschaltung oder "Aperture Switching" bezeichnet werden.

Gemäß der vorliegenden Erfindung wird ein weiterer Faktor b durch den parallelen Einsatz mehrerer Empfänger erzielt, die bestimmten Antennensegmentgruppen, z.B. der vorderen und hinteren Hälfte der Antenne in Bewegungsrichtung der Trägerplattform, zugeordnet sind.

Es können also n = a x b "virtuelle" Empfänger realisiert werden, von denen nur b physisch vorhanden sein müssen. Danach lässt sich bei einem Mehrkanal-Synthetik-Apertur-Radarsystem (SAR) eine SAR-Gruppenantenne mit n Empfängern nachbilden.

Die vorstehend angeführte Anwendung des Merkmals mit dem Faktor b ist von großer praktischer Bedeutung, da die Faktoren a und b in der Praxis nur in engen Grenzen erhöht werden können. Wird nämlich die Pulswiederholrate PRF eines Synthetik-Apertur-Radarsystems (SAR) erhöht (hier um den Faktor a), so reduziert sich bekanntlich die erreichbare Bild-Streifenbreite. Außerdem können, wie vorher bereits beschrieben wurde, aus Aufwandsgründen in einem Satelliten auch nicht beliebig viele hardwaremäßig tatsächlich vorhandene Empfangsketten (hier Faktor b) untergebracht werden. Die praktischen Ausführungsbeispiele TerraSAR-X und Radarsat-2 zeigen, dass aber sehr wohl die Pulswiederholfrequenz PRF um den Faktor a = 2 erhöht werden kann. Andererseits sind auch jeweils zwei komplette Empfangsketten realisiert (Faktor b = 2), da in Satelliten in der Regel alle wichtigen Komponenten doppelt (redundant) ausgelegt werden.

Daher können mit der erfindungsgemäßen Technik beispielsweise für diese Satelliten vier virtuelle Empfangskanäle nachgebildet werden, was viele interessante Anwendungen erst ermöglicht, die mit nur zwei Empfangskanälen nicht realisierbar wären.

Das Multiplexing eines Empfängers, um eine Mehrkanal-Technik zu ermöglichen, ist ein bekanntes Verfahren, das auch in der Radartechnik angewendet wird. So ist in der US-Patentschrift 5 966 092 diese Möglichkeit für ein Monopuls-Radar erwähnt, bei dem es sich um eine Ortung, insbesondere die Richtungsbestimmung von Radarzielen, handelt. In diesem Zusammenhang ist aber darauf hinzuweisen, dass es sich dort um ein einfaches Umschalten (Multiplexen) von Radarkanälen handelt, das nicht, wie bei der vorliegenden Erfindung, mit dem Verschieben von Antennenöffnungen (Aperture Switching) verbunden ist. Vielmehr ist dort jedem Kanal fest eine separate Antenne zugeordnet.

Ein anderes Beispiel für Empfänger-Multiplexing ist in der deutschen Patentschrift DE-1001 20 536 C2 im Zusammenhang mit einem Radarsystem zur aktiven Hinderniswarnung angegeben. Auch hier wird ein Empfänger zwischen verschiedenen Antennenelementen (Kanälen) umgeschaltet. Die Antennenelemente werden hier nacheinander angesteuert.

Dem Multiplexing bei den aus US-5 966 092 und DE-1001 20 536 C2 bekannten Systemen ist gemeinsam, dass die Antennenelemente sequentiell zum Empfänger durchgeschaltet werden.

Bei der hier vorliegenden Erfindung bleibt jedoch beim Multiplexing die ganze SAR-Gruppenantennne mit dem Empfänger verbunden.

Durch besondere Schemata der Amplitudenbelegung der SAR-Gruppenantenne können bei einem SAR-System nach der Erfindung Phasenzentren der Antenne verschoben werden, was im Einzelnen auch beispielhaft in einigen Unteransprüchen angegeben ist. Dabei sollten möglichst große Bereiche der Antenne aktiv bleiben, also zum Empfang beitragen und damit auch zu einem hohen Antennengewinn beisteuern.

Als vorteilhafte Weiterbildungen des erfindungsgemäßen mehrkanaligen Synthetik-Apertur-Radars sind bestimmte Schaltmuster für die Antennensegmente, Erweiterungen der aktiven Radarantenne um passive Einheiten sowie die Nutzung der sogenannten SAR-Burst-Mode-Technik anzusehen, was in Unteransprüchen ebenfalls angegeben ist.

Somit können bei Anwendung der vorliegenden Erfindung bereits bestehende SAR-Satellitensysteme als Multikanalsysteme betrieben werden und bei zukünftigen Entwicklungen kann auf eine Vielzahl von teuren, schweren und Energie verbrauchenden Empfängern verzichtet werden.

In vorteilhafter Weise ist die SAR-Gruppenantenne eine elektronisch phasengesteuerte Antenne mit einer Vielzahl von Sende-/Empfangsmodulen. Bei der Zeitmultiplex-Umschaltung wird hierbei die Verstärkung des jeweiligen Empfangsteils und/oder auch Sendeteils der Sende-/Empfangsmodule in den Bereichen der empfangsmäßig zu deaktivierenden Antennensegmente auf null geschaltet, so dass über die verschiedenen Antennensegmente die speziellen Amplitudenbelegungen einschaltbar und dabei einzelne Antennensegmente ein- und abschaltbar sind.

Für die vorstehend angegebene Weiterbildung der vorliegenden Erfindung ist also die Tatsache wichtig, dass jeder der vielen Sende-/Empfangsmodule ("Transmit/Receive Modules"; TR-Modules) für sich in seiner Verstärkung einzeln gesteuert werden kann (Amplitudengewichtung von TR-Modulen). Wird die Verstärkung beim Senden oder Empfangen auf null eingestellt, so ist das betreffende Element praktisch abgeschaltet und liefert keinen Beitrag für die Summation. Werden die Sende-/Empfangsmodule am Rand einer Planar-Antenne, z.B. vorne oder hinten, abgeschaltet, so kann das Phasenzentrum der Antenne versetzt werden. Dieser technische Trick wurde bisher in der Praxis nicht angewandt, da keine Anwendung dafür bekannt war. In der vorliegenden Erfindung wird er dazu benutzt, um einer SAR-Gruppenantenne verschiedene Phasenzentren zuzuweisen. Da Planar-Antennen in TR-Modul-Technik in der Regel mehrere hundert Module enthalten, ist eine feine Steuerung des Phasenzentrums möglich.

Die SAR-Gruppenantenne kann auch als eine passive Planar-Antenne ausgebildet sein, wobei in diesem Fall zur Zeitmultiplex-Umschaltung in den Verbindungen des Empfängers zu den Antennensegmenten Mikrowellenschalter vorgesehen sind, so dass über die verschiedenen Antennensegmente die speziellen Amplitudenbelegungen einschaltbar und dabei einzelne Antennensegmente ein- und abschaltbar sind.

Einfache passive Planar-Antennen bieten für diesen Zweck in der Praxis nicht so viel Flexibilität wie elektronisch phasengesteuerte Gruppenantennen, da hier, sofern die notwendigen Mikrowellenschalter vorgesehen sind, meist nur größere Einheiten, sogenannte "Panels" oder "Leafs", ein- und abgeschaltet werden können.

Vorteilhafte und zweckmäßige Weiterbildungen sind Gegenstände von auf den Patentanspruch 1 unmittelbar oder mittelbar rückbezogenen Ansprüchen.

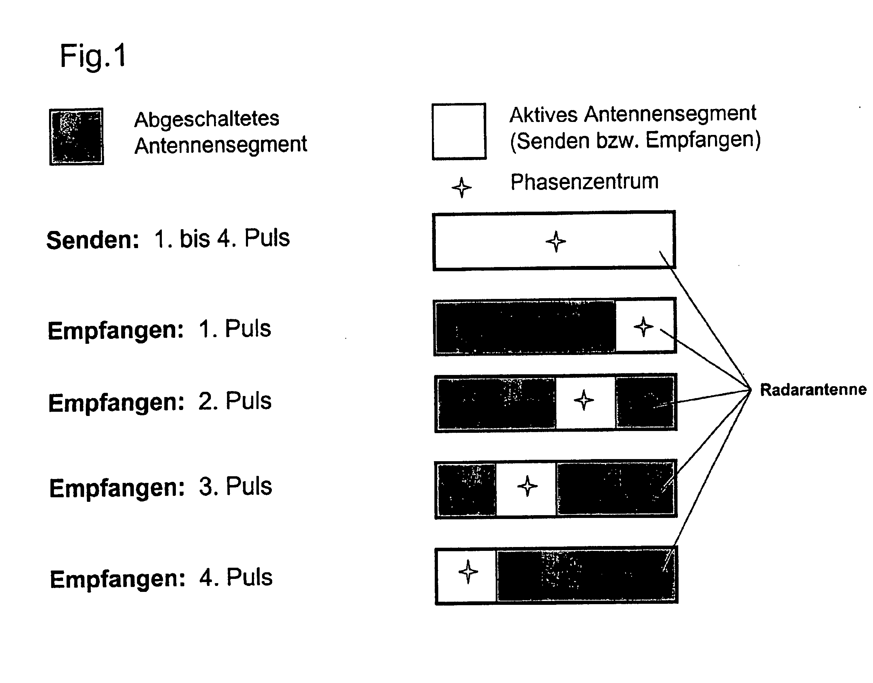

Nachfolgend wird die Erfindung anhand von in Zeichnungen dargestellten Anordnungsbeispielen im Einzelnen erläutert. Es ist anzumerken, dass alle diese Anordnungen, außer der in Fig.1 gezeigten Anordnung, prinzipiell mit dem TerraSAR-X realisierbar sind. Es zeigen:
- Fig.1: schematisch die Anordnung einer typischen SAR-Planar-Gruppenantenne, mit der als Ganzes gesendet wird und bei der mit vier verschiedenen Aperturbelegungen und in vier Schritten empfangen wird;
- Fig.2: schematisch eine Anordnung für ein SAR-Along-Track-Interferometer, das durch Multiplexing eines Empfangskanals und Aperture-Switching der Gruppenantenne realisiert ist;
- Fig.3: schematisch eine Anordnung für ein SAR-Across-Track-Interferometer, das durch Multiplexing eines Empfangskanals und Aperture-Switching der Gruppenantenne realisiert ist;
- Fig.4: schematisch eine Anordnung mit einer durch zwei Empfangsantenneneinheiten erweiterten aktiven SAR-Satelliten-Hauptantenne;
- Fig.5: schematisch die Anordnung eines virtuellen 4-Kanal-SAR mit Zweifach-Multiplexing, Aperture-Switching und einem Zweikanal-Empfänger;
- Fig.6: schematisch die Anordnung eines SAR-Along-Track-Interferometers, mit dem zwei interferometrische Datensätze mit unterschiedlich langen Basislinenlängen aufgenommen werden können (Multi-Baseline-Interferometer);
- Fig.7: schematisch die Anordnung eines kombinierten Along- und Across-Track-SAR-Interferometers, und
- Fig. 8: schematisch die Anordnung eines Drei-Kanal-SAR-Systems mit Zweifach-Multiplexing, Aperture-Switching und einem Zweikanal-Empfänger.

Das Wesentliche an einer Gruppenantenne ist, dass sie eine Abtastung an verschiedenen räumlichen Positionen ermöglicht. Dazu werden die Phasenzentren der einzelnen Kanäle räumlich separiert, wobei es sich grundsätzlich um die Sende- und/oder Empfangsantennen handeln kann. Die räumliche Abtastung erfolgt bei einer herkömmlichen Gruppenantenne in den einzelnen Kanälen gleichzeitig.

In Fig.1 ist schematisch eine typische SAR-Planar-Gruppenantenne wiedergegeben, mit der sowohl gesendet als auch empfangen wird und die sich mit ihrer Längsachse in Bewegungsrichtung der Trägerplattform erstreckt. In diesem Beispiel wird die ganze Gruppenantenne zum Senden verwendet. Beim Empfang der vom Boden zurückgestreuten Radarpulse werden bei jedem der in der Standard-PRF (Pulswiederholfrequenz) subkommutierten Pulse andere Antennensegmente der Gruppenantennenapertur deaktiviert, d.h. abgeschaltet. Die deaktivierten Antennensegmente sind in Fig.1 genauso wie auch in allen anderen Figuren grau markiert und die aktivierten Antennensegmente weiß dargestellt. Mit Hilfe dieses sogenannten "Aperture Switching" und eines zeitlichen Multiplexing mit der vierfachen Standard-PRF wird eine 4-Antennensegment-Gruppenantenne mit vier äquidistanten Phasenzentren nachgebildet. Dabei kommt nur ein Empfänger zum Einsatz. In Fig.1 ist veranschaulicht, welche Antennensegmente der Gruppenantenne beim Empfangen abgeschaltet werden müssen, um die gewünschten vier Phasenzentren zu erhalten.

Die Umschaltung zwischen den virtuellen Kanälen muss innerhalb eines Puls-Wiederhol-Intervalls (Pulse Repetition Interval) des Standard-SAR-Systems erfolgen. Das bedeutet, dass die Pulswiederholrate PRF des SAR-Systems um den Faktor, der der Anzahl der Empfangskanäle entspricht, erhöht werden muss. Eine Erhöhung der Pulswiederholrate PRF ist unter anderem nur durch eine Einschränkung der Bild-Streifenbreite zu erreichen. Tatsächlich kann der in Fig.1 angegebene Fall nicht mit dem TerraSAR-X Satelliten realisiert werden, da dieser maximal nur eine zweifach erhöhte Pulswiederholrate PRF zulässt. Die damit verbundene Halbierung der Streifenbreite kann in Kauf genommen werden, da die zusätzlichen Anwendungen, die mit einer Gruppenantenne möglich sind, einen großen qualitativen Gewinn bringen.

Im Einzelnen werden im Beispiel von Fig.1 alle vier Impulse der Reihe nach von der als Ganzes mit allen ihren vier Antennensegmenten aktivierten Gruppenantenne ausgesendet. In der Empfangsphase des rückgestreuten ersten Impulses ist nur das erste Antennensegment (ganz rechts), in der Empfangsphase des rückgestreuten zweiten Impulses nur das zweite Antennensegment (zweites von rechts), in der Empfangsphase des rückgestreuten dritten Impulses nur das dritte Antennensegment (zweites von links) und in der Empfangsphase des rückgestreuten vierten Impulses nur das vierte Antennensegment (ganz links) der SAR-Gruppenantenne aktiviert, wobei die angenommene Bewegungsrichtung der Trägerplattform von links nach rechts sei.

Bei der Verwendung einer einfachen Planar-Gruppenantenne ohne Sende-/Empfangs-Module werden zur Realisierung der unterschiedlichen Phasenzentren der Kanäle Antennensegmente der Gruppenantenne ein- oder abgeschaltet. Dies kann bei passiven Gruppenantennen, bei denen ein Summierer für die verschiedenen Antennensegmente benutzt wird, durch Schließen bzw. Öffnen eines Mikrowellenschalters erfolgen. Bei einer sogenannten Phased Array Antenne, also einer elektronisch phasengesteuerten Gruppenantenne, wird zur Deaktivierung bei den abzuschaltenden Sende-/Empfangs-Modulen die Verstärkung im Empfangsweg einfach auf Null eingestellt.

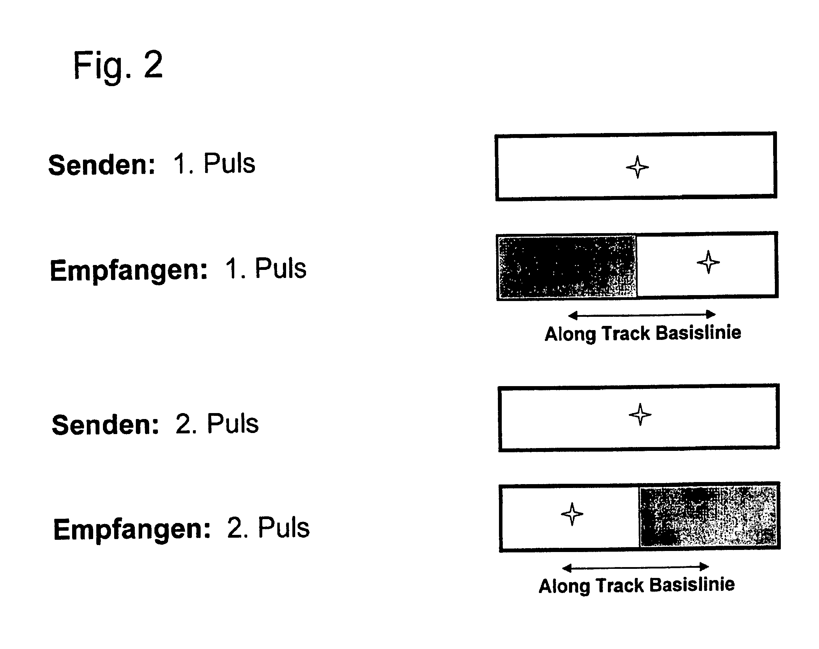

In den schematischen Darstellungen der im Folgenden aufgeführten und anhand der Fig.2 bis Fig.8 beschriebenen Beispiele sind die grau markierten Antennensegmente der Gruppenantennenfläche wieder jeweils abgeschaltet und die weißen Antennensegmente eingeschaltet. Es wird ausdrücklich darauf hingewiesen, dass für die Verschiebung der Antenenn-Phasenzentren stattdessen oder auch gleichzeitig entsprechende Teile der Sendeantenne deaktiviert werden können.

Fig.2 zeigt eine SAR-Along-Track-Interferometer-Einrichtung, die mit Hilfe des Umschaltens der aktiven Antennenapertursegmente mit nur einem Empfänger realisiert wird. In diesem Beispiel wird mit der vollen Gruppenantennenfläche, also mit allen beiden in Antennenlängsrichtung aneinandergereihten Antennensegmenten, gesendet. Im Empfangsweg wird beim ersten Impuls das linke Antennensegment der Gruppenantenne abgeschaltet und beim zweiten, zusätzlichen Impuls das rechte Antennensegment der Gruppenantenne abgeschaltet. Ein Antennensegment entspricht hier einer Gruppenantennenhälfte, wobei die Trennungslinie der beiden Antennensegmente quer zur Gruppenantennenlängsrichtung und auch quer zur Bewegungsrichtung der Trägerplattform verläuft.

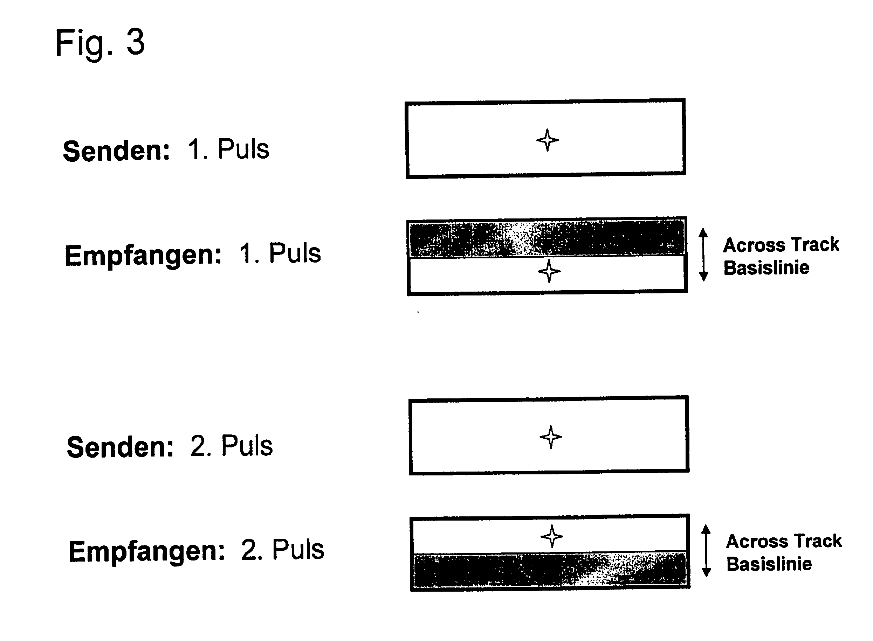

In Fig.3 ist eine SAR-Across-Track-Interferometer-Einrichtung realisiert, bei welcher ebenfalls mit der vollen Gruppenantennenfläche, also mit allen beiden, hier zueinander parallelen Antennensegmenten, gesendet wird und der Empfänger von Impuls zu Impuls zwischen dem oberen und dem unteren Antennensegment umgeschaltet wird, wobei das jeweils gegenüberliegende Antennensegment abgeschaltet wird. Ein Antennensegment entspricht hier einer Gruppenantennenhälfte, wobei die Trennungslinie der beiden Antennensegmente in Gruppenantennenlängsrichtung und auch in Bewegungsrichtung der Trägerplattform verläuft.

Das Aperturumschalten ("Aperture Switching") ermöglicht also ganz unterschiedliche Anwendungen mit dem gleichen Gerät ("Hardware").

Um den dadurch entstehenden Verlust in der Leistungsbilanz des Synthetik-Apertur-Radars auszugleichen, kann die Antennenkonstruktion vergrößert werden. Da aber die Sende-/Empfangs-Module aktiver elektronisch phasengesteuerter Gruppenantennen aufwändig, teuer und schwer sind, kann gemäß einer vorteilhaften Weiterbildung der Erfindung der mit aktiven Sende-/Empfangs-Modulen belegte Antennensegmenteteil der Radar-Hauptantenne durch nur passive Antennensegmente ergänzt werden. Diese sind preiswert und mit geringem Gewicht herzustellen. Je nach Anwendung ist dann die Hauptantenne in Bewegungsrichtung der Trägerplattform und/oder quer zur Bewegungsrichtung der Trägerplattform durch reine passive Empfangsantennen erweitert.

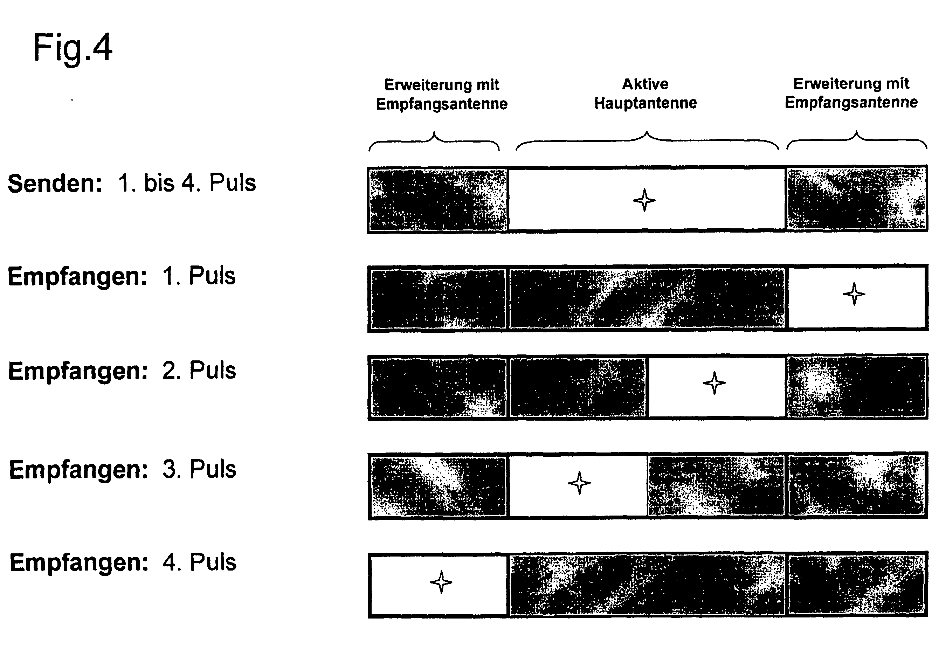

In Fig.4 sind beispielsweise zwei passive Antennensegmente in Bewegungsrichtung der Trägerplattform angefügt und zwar jeweils eines auf beiden Seiten der aktiven Hauptantenne, die aus zwei in Bewegungsrichtung der Trägerplattform aneinandergereihten Antennensegmenten besteht. Dadurch wird die Gruppenantennenlänge insgesamt verdoppelt. Somit kann bei einem 4-Kanal-SAR-System beim Empfang mit Antennensegmenten der halben Hauptantennenlänge anstelle eines Viertels der Hauptantennenlänge gearbeitet werden (vergleiche Fig.1).

Da Radarsatelliten für den Start in einer Trägerrakete eine kompakte Bauform haben müssen, können die zusätzlichen passiven Antennensegmente in der Erdumlaufbahn aufgeklappt oder aus dem Körper des Satelliten ausgefahren werden. Ein weiterer Vorteil der verlängerten Gruppenantenne ist, dass sich eine größere Basislinenlänge für interferometrische Messungen und insgesamt eine längere SAR-Gruppenantenne ergibt.

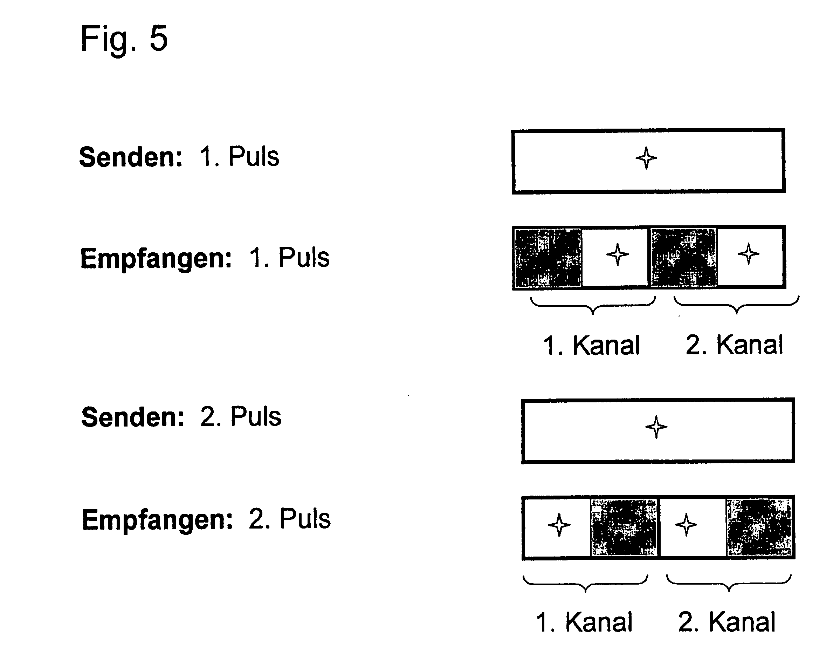

Eine wesentliche Eigenschaft der Erfindung ist die Verknüpfbarkeit der Zeitmultiplex-Antennensegmentumschalttechnik mit einem Mehrkanal-Empfänger in Form einer Gruppenantenne. Diese vorteilhafte Kombination kommt im Beispiel von Fig.5 zum Einsatz. Bei diesem mit dem TerraSAR-X kompatiblen Beispiel ist die Pulswiederholfrequenz PRF verdoppelt (Multiplexfaktor a = 2). Weiterhin werden zwei vollständige Empfänger verwendet, von denen der eine der linken und der andere der rechten Antennenhälfte zugeordnet ist. Jede Antennenhälfte besteht aus zwei Antennensegmenten. Auf diese Weise lässt sich ein 4-Kanal-System entsprechend Fig.1 nachbilden.

Die Gesamtzahl der realisierten Kanäle ergibt sich dabei aus der Multiplikation des Multiplex-Faktors a und der Anzahl b der tatsächlich vorhandenen Empfangskanäle. Die einem tatsächlichen Empfangskanal, im Beispiel von Fig.5 sind dies der 1. Kanal und der 2. Kanal, zugeordnete Antennenhälfte wird dabei, wie vorstehend beschrieben, bei den subkommutierten Pulsen jeweils mit einer anderen Amplitudenbelegung beaufschlagt. Dies geschieht zeitlich parallel in jedem Empfangskanal.

Im Beispiel von Fig.5 werden der erste und zweite Impuls von der mit allen ihren vier Antennensegmenten aktivierten Gruppenantenne ausgesendet. Dem ersten Empfangskanal sind die beiden der linken Antennenhälfte zugehörigen Antennensegmente der SAR-Gruppenantenne und dem zweiten Empfangskanal die beiden der rechten Antennenhälfte zugehörigen Antennensegmente zugeordnet. Die beiden linken Antennensegmente bilden somit eine erste Antennensegmentgruppe und die beiden rechten Antennensegmente eine zweite Antennensegmentgruppe. Für den Empfang des ersten Impulses sind in jeder der beiden Antennensegmentgruppen die links angeordneten Antennensegmente deaktiviert und die rechts angeordneten Antennensegmente aktiviert, wogegen für den Empfang des zweiten Impulses in jeder der beiden Antennensegmentgruppen die rechts angeordneten Antennensegmente deaktiviert und die links angeordneten Antennensegmente aktiviert sind.

Für praktische Realisierungen ist die Kombination der Zeitmultiplex-Antennensegmentumschalttechnik mit einem Mehrkanal-Empfänger in Form einer Gruppenantenne oft von entscheidender Bedeutung, da sowohl die Zahl der Empfänger als auch der Multiplex-Faktor gewöhnlich stark begrenzt ist. So verfügt der TerraSAR-X-Satellit über zwei Empfangskanäle, wie dies in dem Beitrag "Conceptual Studies for Exploiting the TerraSAR-X Dual Receive Antenna" von J. Mittermayer und H. Runge, IGARSS 03, Toulouse/Frankreich, 21.07.03-25.07.03, IEEE 2003 International Geoscience and Remote Sensing Symposium, IEEE, 2003, beschrieben ist, und die Pulswiederholfrequenz PRF kann maximal um den Faktor zwei erhöht werden, wie es auch in dem sogenannten "Dual Polarization Mode" der Fall ist.

Mit Hilfe der vorstehend beschriebenen Techniken lässt sich daher z.B. mit dem TerraSAR-X-Satelliten eine 4-Kanal-Gruppenantenne realisieren.

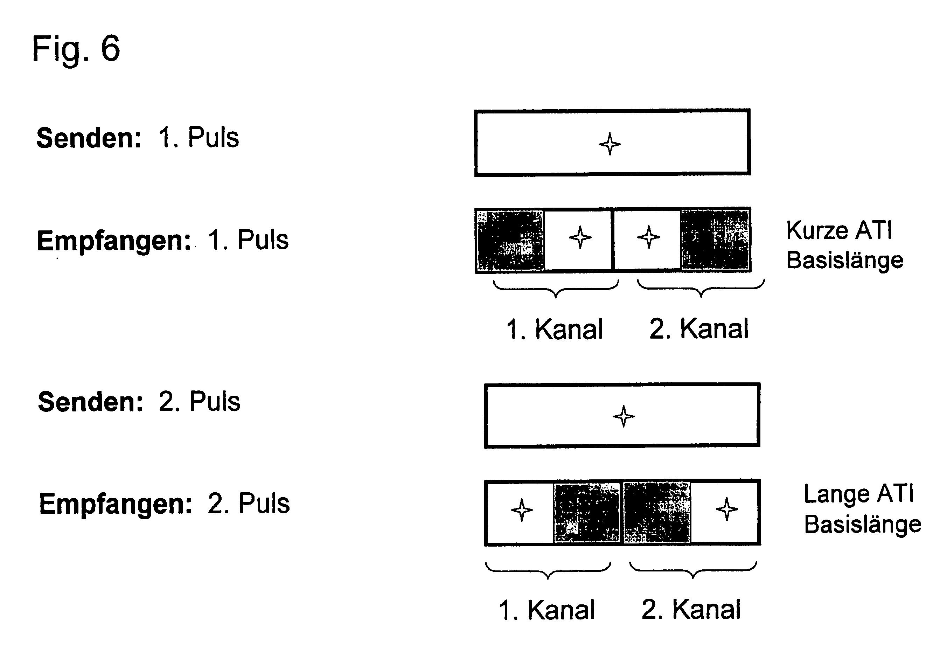

Damit erschließt sich für derartige Satelliten eine Vielzahl von neuen Anwendungsmöglichkeiten. Neben der Gruppenantennen-Technik können auch, wie in Fig.6 gezeigt ist, zwei unterschiedliche SAR-Along-Track-Interferometrie-Basislinenlängen realisiert werden, die bei der Auflösung von Mehrdeutigkeiten bei der Auswertung von interferometrischen Messungen hilfreich sind.

Im Beispiel von Fig.6 werden sowohl der erste als auch der zweite Impuls von der in allen vier Antennensegmenten aktivierten Gruppenantenne ausgesendet. Dem ersten Empfangskanal sind die beiden der linken Antennenhälfte zugehörigen Antennensegmente der SAR-Gruppenantenne und dem zweiten Empfangskanal die beiden der rechten Antennenhälfte zugehörigen Antennensegmente zugeordnet. Die beiden linken Antennensegmente bilden somit eine erste Antennensegmentgruppe und die beiden rechten Antennensegmente eine zweite Antennensegmentgruppe. Für den Empfang des ersten Impulses ist in der ersten (linken) Antennensegmentgruppe das linke Antennensegment deaktiviert und das rechte Antennensegment aktiviert und in der zweiten (rechten) Antennensegmentgruppe das linke Antennensegment aktiviert und das rechte Antennensegment deaktiviert, so dass sich wegen der beiden nahe beieinander liegenden aktivierten Antennensegmente eine kurze SAR-Along-Track-Interferometrie-Basislinenlänge ergibt. Dagegen ist für den Empfang des zweiten Impulses in der ersten (linken) Antennensegmentgruppe das linke Antennensegment aktiviert und das rechte Antennensegment deaktiviert und in der zweiten (rechten) Antennensegmentgruppe das linke Antennensegment deaktiviert und das rechte Antennensegment aktiviert, so dass sich wegen der beiden weit voneinander entfernt liegenden aktivierten Antennensegmente eine lange SAR-Along-Track-Interferometrie-Basislinenlänge ergibt.

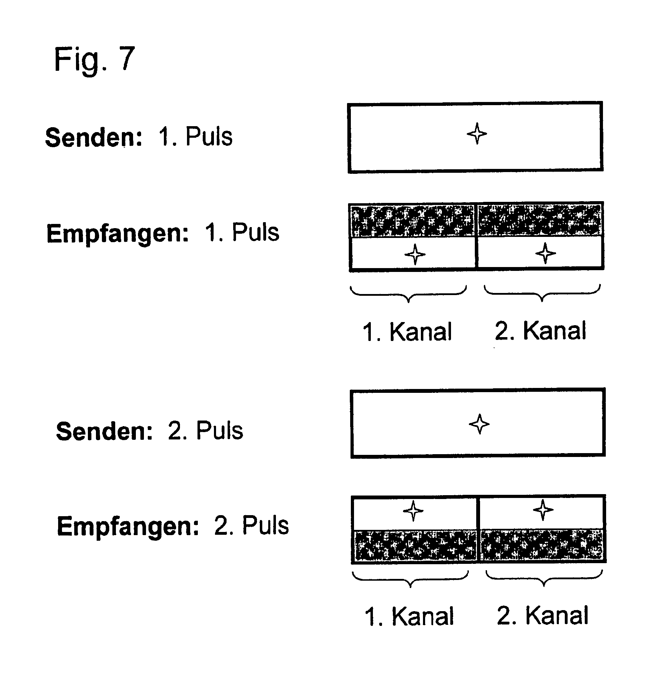

Weiterhin wird durch Anwendung der durch die vorliegende Erfindung geschaffenen Kombination der Zeitmultiplex-Antennensegmentumschalttechnik mit einem Mehrkanal-Empfänger in Form einer SAR-Gruppenantenne, wie in Fig.7 dargestellt ist, mit Hilfe z.B. des TerraSAR-X-Satelliten eine kombinierte SAR-Along- und Across-Track-Interferometrie möglich. Mit dieser Kombination ist es unter anderem möglich, gleichzeitig die Geschwindigkeit und Höhe eines bewegten Objektes zu bestimmen. Durch die kurze Across-Track-Basislinie in diesem TerraSAR-X-Fall lässt sich die Flughöhe von Flugkörpern ohne Mehrdeutigkeiten aus der interferometrischen Phase bestimmen. Bodenechos können durch Differenzbildung der beiden Along-Track-Empfangskanalpaare eliminiert werden.

Eine Detektion von hoch fliegenden Objekten ist möglich, wenn im Signalprozessor für den Wert der Across-Track-Phase ein Schwellenwert gesetzt wird. Bildpunkte, die aus Helligkeit ("Pixel Brightness" oder "Amplitude"), Along-Track- und Across-Track-Phase bestehen und deren Across-Track-Phase einen gewissen Wert übersteigt, können so als hoch fliegende Flugzeuge identifiziert werden. Die Geschwindigkeitskomponente quer zur Bewegungsrichtung der Trägerplattform kann aus der Along-Track-Phase bestimmt werden. Der vierte Empfangskanal wird durch Subtraktion zur Auslöschung des statischen Radarsignals verwendet.

Im Beispiel von Fig.7 werden sowohl der erste als auch der zweite Impuls von der in allen vier Antennensegmenten aktivierten SAR-Gruppenantenne ausgesendet. Dem ersten Empfangskanal sind die beiden der linken Antennenhälfte zugehörigen Antennensegmente der SAR-Gruppenantenne und dem zweiten Empfangskanal die beiden der rechten Antennenhälfte zugehörigen Antennensegmente zugeordnet, wobei hier die beiden dem ersten Kanal bzw. zweiten Kanal zugeordneten Antennensegmente nicht in Längsrichtung der Antenne, sondern quer zur Längsrichtung der Gruppenantenne nebeneinander angeordnet sind, also parallel zueinander liegen. Die beiden linken Antennensegmente bilden auch hier eine erste Antennensegmentgruppe und die beiden rechten Antennensegmente eine zweite Antennensegmentgruppe. Für den Empfang des ersten Impulses sind in beiden Antennensegmentgruppen jeweils das in Fig.7 obere Antennensegment deaktiviert und das in Fig.7 untere Antennensegment aktiviert, wogegen für den Empfang des zweiten Impulses in beiden Antennensegmentgruppen jeweils das in Fig.7 obere Antennensegment aktiviert und das in Fig.7 untere Antennensegment deaktiviert sind.

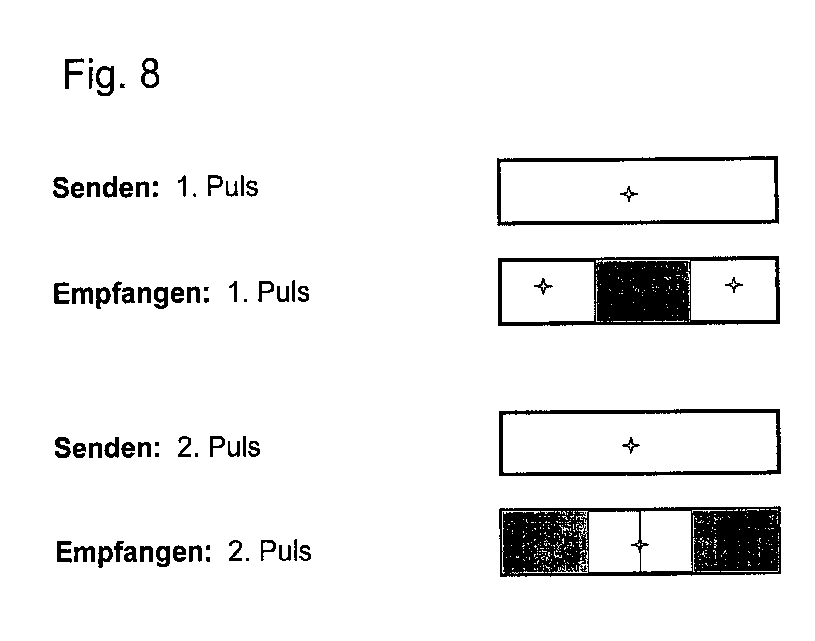

Fig.8 zeigt die Realisierung einer Drei-Kanal-SAR-Gruppenantennne mit Hilfe von Zeit-Multiplexing mit dem Faktor 2 und zwei vollständigen Empfangskanälen. Sowohl der erste als auch der zweite Impuls werden von der als Ganzes aktivierten SAR-Gruppenantenne ausgesendet. Zur Realisierung des für den Empfang des zweiten Impulses relevanten mittleren Phasenzentrums müssen die Anteile aus den Empfangskanälen der in Bewegungsrichtung der Trägerplattform vorderen und hinteren Antennenhälfte addiert werden. Bei der Drei-Kanal-SAR-Anordnung beträgt die aktive Antennenfläche beim Empfang ein Drittel der ganzen Gruppenantennenfläche, im Gegensatz zu einem Viertel bei der Vier-Kanal-SAR-Anordnung.

Eine zusätzliche und vorteilhafte Möglichkeit zum Erhöhen der Anzahl von Kanälen, außer dem zeitlichen Multiplexing und den parallel betriebenen Empfangskanälen, besteht in einer Modifikation der sogenannten ScanSAR-Technik. Die ScanSAR-Technik wird bisher dazu eingesetzt, um die Streifenbreite eines Synthetik-Apertur-Radarsystems zu vergrößern, indem ein Teilstreifen nur mit einer bestimmten Anzahl von Pulsen ("Bursts") beaufschlagt wird. Nach jedem "Burst" wird auf einen anderen Teilstreifen umgeschaltet.

Durch die hier angesprochene zweckmäßige Weiterbildung der Erfindung wird vorgeschlagen, diese Technik zu nutzen, um eine höhere Kanalzahl zu erreichen, ohne dabei die Streifenbreite zu vergrößern. Dabei wird der Streifen am Erdboden nur für eine bestimmte Zeit mit einer Anzahl von Radarimpulsen ("Bursts") beleuchtet und dann mit Hilfe der Aperturumschaltung ("Aperture Switching") auf ein anderes Phasenzentrum der Gruppenantenne umgeschaltet.

Mit der Anzahl der Bursts innerhalb der Beleuchtungszeit des Ziels (Synthetik-Apertur-Zeit) wird ein zusätzlicher Multiplikator für die Anzahl der realisierbaren Kanäle geschaffen.

Äquivalent zu dem vorher beschriebenen Multiplex-Verfahren wird mit in der Standard-Pulswiederholfrequenz PRF subkommutierten zusätzlichen Impulsen (Fig.1) bei jedem Burst ein anderer Teil der Radar-Gruppenantenne aktiviert. Dieses Verfahren ist mit der oben beschriebenen Multiplex-Technik und auch der Mehrkanal-Methode problemlos kombinierbar, so dass sich eine noch größere Zahl von "virtuellen" Kanälen ergibt.

Nachteilig bei dieser Burst-Methode ist zwar, dass mit jedem Burst ein anderer Spektralbereich der abzubildenden Objekte aufgenommen wird. Dies führt bei einer Interferogramm-Bildung bei sogenannten Flächenstreuern zu einer Dekorrelation. Da es sich aber gezeigt hat, dass Punktstreuer auch noch über einen größeren Winkelbereich kohärent bleiben, können mit solchen Objekten interferometrische Messungen durchgeführt werden.

## Patentansprüche

1. Synthetik-Apertur-Radar(SAR)-System zur Abbildung von Bodenstreifen mit mehreren, nämlich a Empfangskanälen, von denen jeder mit einem verschiedenen Antennensegment einer a Antennensegmente aufweisenden SAR-Gruppenantenne verbunden ist, die an einer sich über dem Erdboden bewegenden Trägerplattform angebracht ist, wobei die Antennensegmente der SAR-Gruppenantenne für den Empfang der Puls-Echosignale vorher über die SAR-Gruppenantenne ausgesendeter SAR-Impulse räumlich getrennte Phasenzentren aufweisen und somit jeder Empfangskanal einem unterschiedlichen Phasenzentrum zugeordnet ist und die mit jeweils einem der Antennensegmente verbundenen Empfangskanäle einem gemeinsamen SAR-Empfänger zugeteilt sind und nach Art einer Zeitmultiplex-Umschaltung als Zeitmultiplex-Kanäle im SAR-Empfänger betrieben sind, **dadurch gekennzeichnet, dass** über die verschiedenen einzeln ein- und abschaltbaren Antennensegmente besondere Schemata der Amplitudenbelegung der SAR-Gruppenantenne einschaltbar und damit Phasenzentren der SAR-Gruppenantenne verschiebbar sind, wobei die Pulswiederholfrequenz (PRF) des empfangsseitig im Zeitmultiplex betriebenen SAR-Systems im Vergleich zu einem ohne Zeitmultiplex betriebenen SAR-System um den Faktor a heraufgesetzt ist, und dass parallel zwei oder mehr, nämlich b SAR-Empfänger vorgesehen sind, die jeweils einer unterschiedlichen Antennensegmentgruppe der b Antennensegmentgruppen für den Empfang aufweisenden SAR-Gruppenantenne zugeordnet sind, wobei die Antennensegmentgruppen jeweils zwei oder mehr Antennensegmente enthalten.

2. Synthetik-Apertur-Radar(SAR)-System nach Anspruch 1, **dadurch gekennzeichnet, dass** während der Sendephasen zur Aussendung der SAR-Impulse über die verschiedenen Antennensegmente der SAR-Gruppenantenne unterschiedliche Amplitudenbelegungen einschaltbar und dazu die einzelnen Antennensegmente ein- und abschaltbar sind.

3. Synthetik-Apertur-Radar(SAR)-System nach Anspruch 2, **dadurch gekennzeichnet, dass** während der Sendephasen zur Aussendung der SAR-Impulse sämtliche Antennensegmente der SAR-Gruppenantenne eingeschaltet sind.

4. Synthetik-Apertur-Radar(SAR)-System nach einem der vorhergehenden Ansprüche, **dadurch gekennzeichnet, dass** die SAR-Gruppenantenne eine passive Planar-Antenne ist und dass zur Zeitmultiplex-Umschaltung in den Verbindungen des Empfängers zu den Antennensegmenten Mikrowellenschalter vorgesehen sind, so dass über die verschiedenen Antennensegmente die vorgesehenen Amplitudenbelegungen einschaltbar und dabei einzelne Antennensegmente ein- und abschaltbar sind.

5. Synthetik-Apertur-Radar(SAR)-System nach einem der Ansprüche 1 bis 3, **dadurch gekennzeichnet, dass** die SAR-Gruppenantenne eine elektronisch phasengesteuerte Antenne mit einer Vielzahl von Sende-/Empfangsmodulen ist und dass bei der Zeitmultiplex-Umschaltung die Verstärkung des jeweiligen Empfangsteils und/oder Sendeteils der Sende-/Empfangsmodule in den Bereichen der empfangsmäßig bzw. sendemäßig zu deaktivierenden Antennensegmente auf null geschaltet wird, so dass über die verschiedenen Antennensegmente die vorgesehenen Amplitudenbelegungen einschaltbar und dabei einzelne Antennensegmente ein- und abschaltbar sind.

6. Synthetik-Apertur-Radar(SAR)-System nach einem der vorhergehenden Ansprüche, **dadurch gekennzeichnet, dass** die SAR-Gruppenantenne mittels der Zeitmultiplex-Umschaltung derart gesteuert ist, dass der Bodenstreifen nur für eine bestimmte Zeit mit einer Anzahl von SAR-Impulsen (Bursts) von einem Antennensegment beleuchtet ist und dann für die gleiche bestimmte Zeit und damit für eine gleiche Anzahl von SAR-Impulsen auf ein anderes Antennensegment umgeschaltet wird.

7. Synthetik-Apertur-Radar(SAR)-System nach einem der vorhergehenden Ansprüche, **dadurch gekennzeichnet, dass** bei Anwendung für SAR-Along-Track-Interferometrie in Bewegungsrichtung der Trägerplattform aneinandergereihte Antennensegmente im Zeitmultiplex umgeschaltet, d.h. an- und abgeschaltet werden (Fig.2).

8. Synthetik-Apertur-Radar(SAR)-System nach einem der Ansprüche 1 bis 6, **dadurch gekennzeichnet, dass** bei Anwendung für SAR-Across-Track-Interferometrie quer zur Bewegungsrichtung der Trägerplattform angeordnete Antennensegmente im Zeitmultiplex umgeschaltet, d.h. an- und abgeschaltet werden (Fig.3).

9. Synthetik-Apertur-Radar(SAR)-System nach einem der Ansprüche 1 bis 6, **dadurch gekennzeichnet, dass** eine für insgesamt vier Empfangskanäle vorgesehene SAR-Gruppenantenne derart ausgebildet ist, dass sie zwei in Bewegungsrichtung der Trägerplattform aneinandergereihte, durch jeweils eine Antennenhälfte gebildete und jeweils einem Empfänger zugeordnete Antennensegmentgruppen für den Empfang aufweist, wobei diese beiden Antennensegmentgruppen jeweils zwei ebenfalls in Bewegungsrichtung der Trägerplattform angeordnete Antennensegmente enthalten, die durch die Zeitmultiplex-Umschaltung so an- bzw. abgeschaltet werden, dass von den insgesamt vier in Bewegungsrichtung der Trägerplattform aneinandergereihten Antennensegmenten der gesamtem SAR-Gruppenantenne die erste und dritte entgegengesetzt zur zweiten und vierten wechselweise von empfangenem Impuls zu empfangenem Impuls ein- bzw. abgeschaltet sind (Fig.5).

10. Synthetik-Apertur-Radar(SAR)-System nach einem der Ansprüche 1 bis 6, **dadurch gekennzeichnet, dass** eine für insgesamt drei Empfangskanäle vorgesehene SAR-Gruppenantenne derart ausgebildet ist, dass sie zwei in Bewegungsrichtung der Trägerplattform aneinandergereihte, durch jeweils eine Antennenhälfte gebildete und jeweils einem Empfänger zugeordnete Antennensegmentgruppen für den Empfang aufweist, wobei diese beiden Antennensegmentgruppen zusammen drei ebenfalls in Bewegungsrichtung der Trägerplattform angeordnete Antennensegmente enthalten, die durch die Zeitmultiplex-Umschaltung so an- bzw. abgeschaltet werden, dass von den insgesamt drei in Bewegungsrichtung der Trägerplattform aneinandergereihten Antennensegmenten der gesamtem SAR-Gruppenantenne die beiden äußeren entgegengesetzt zur mittleren wechselweise von empfangenem Impuls zu empfangenem Impuls ein- bzw. abgeschaltet sind und die empfangenen Signale der beiden Antennensegmentgruppen bei empfangsmäßig eingeschaltetem mittlerem Antennensegment summiert werden (Fig.8).

11. Synthetik-Apertur-Radar(SAR)-System nach einem der Ansprüche 1 bis 6, **dadurch gekennzeichnet, dass** die SAR-Gruppenantenne eine Hauptantenne sowohl zum Senden als auch Empfangen der SAR-Impulse bildet und dass neben dieser Hauptantenne zusätzliche passive SAR-Empfangsantennen oder -aperturen vorgesehen sind, die als weitere Antennensegmente zur Erzeugung spezieller Amplitudenbelegungen ein- und abschaltbar sind (Fig.4).

12. Synthetik-Apertur-Radar(SAR)-System nach einem der Ansprüche 1 bis 6, **dadurch gekennzeichnet, dass** in Bewegungsrichtung der Trägerplattform zwei verschiedene SAR-Along-Track-Interferometrie-Basislinienlängen durch eine für insgesamt vier Empfangskanäle vorgesehene SAR-Gruppenantenne gebildet werden, die zwei in Bewegungsrichtung der Trägerplattform aneinandergereihte, durch jeweils eine Antennenhälfte gebildete und jeweils einem Empfänger zugeordnete Antennensegmentgruppen für den Empfang aufweist, wobei diese beiden Antennensegmentgruppen jeweils zwei ebenfalls in Bewegungsrichtung der Trägerplattform angeordnete Antennensegmente enthalten, die durch die Zeitmultiplex-Umschaltung so an- bzw. abgeschaltet werden, dass von den insgesamt vier in Bewegungsrichtung der Trägerplattform aneinandergereihten Antennensegmenten der gesamtem SAR-Gruppenantenne zur Erzeugung einer kurzen Basislinienlänge während eines ersten empfangenen SAR-Impulses das zweite und dritte Antennensegment eingeschaltet und entgegengesetzt zum ersten und vierten Antennensegment geschaltet sind und zur Erzeugung einer langen Basislinienlänge während eines zweiten empfangenen SAR-Impulses das erste und vierte Antennensegment eingeschaltet und entgegengesetzt dazu das zweite und dritte Antennensegment abgeschaltet sind (Fig.6).

13. Synthetik-Apertur-Radar(SAR)-System nach einem der Ansprüche 1 bis 6, **dadurch gekennzeichnet, dass** eine SAR-Along-Track-Interferometrie-Basislinie und eine SAR-Across-Track-Interferometrie-Basislinie durch eine für insgesamt vier Empfangskanäle vorgesehene SAR-Gruppenantenne gebildet werden, die zwei in Bewegungsrichtung der Trägerplattform aneinandergereihte, durch jeweils eine Antennenhälfte gebildete und jeweils einem Empfänger zugeordnete Antennensegmentgruppen für den Empfang aufweist, wobei diese beiden Antennensegmentgruppen jeweils zwei quer zur Bewegungsrichtung der Trägerplattform angeordnete Antennensegmente enthalten, die durch die Zeitmultiplex-Umschaltung so an- bzw. abgeschaltet werden, dass von den insgesamt vier Antennensegmenten der gesamtem SAR-Gruppenantenne während eines ersten empfangenen SAR-Impulses die zwei auf der einen Seite jeder der beiden Antennensegmentgruppen angeordneten Antennensegmente eingeschaltet und.die beiden anderen Antennensegmente abgeschaltet sind und in Umkehrung dazu während eines zweiten empfangenen SAR-Impulses die zwei auf der anderen Seite jeder der beiden Antennensegmentgruppen angeordneten Antennensegmente eingeschaltet und die beiden anderen Antennensegmente abgeschaltet sind (Fig.7).

14. Verwendung des Synthetik-Apertur-Radar(SAR)-Systems nach einem der vorhergehenden Ansprüche bei einer Mehrkanal-SAR-Gruppenantenne auf einer Satelliten-Trägerplattform.

15. Verwendung des Synthetik-Apertur-Radar(SAR)-Systems nach einem der Ansprüche 1 bis 13 bei einer Mehrkanal-SAR-Gruppenantenne auf einer durch ein Flugzeug oder eine Drohne gebildeten Trägerplattform.

16. Verwendung des Synthetik-Apertur-Radar(SAR)-Systems nach Anspruch 14 oder 15 für SAR-Interferometrie.

## Claims

1. A synthetic aperture radar (SAR) system for the imaging of ground strips, comprising a plurality, notably a number a, of receiving channels, each of which is connected to a different antenna segment of an SAR array antenna comprising a number a of antenna segments and being mounted on a carrier platform moving above the ground, wherein, for the reception of pulse echo signals of SAR pulses previously transmitted via the SAR array antenna, the antenna segments of the SAR array antenna comprise spatially separated phase centers and, thus, each receiving channel is assigned to a different phase center, and the receiving channels connected to respectively one of the antenna segments are assigned to a common SAR receiver and are operated in the manner of time-multiplex switching as time-multiplex channels in the SAR receiver,
**characterized in that**, via the various antenna segments adapted to be individually switched on and off, special schemata of the amplitude distribution of the SAR array antenna can be switched on, thus allowing a shifting of phase centers of the SAR array antenna, wherein the pulse repetition frequency (PRF) of the SAR system which on the receiving side is operated in the time-multiplex manner, is increased by the factor a in comparison to an SAR system operated without time multiplexing, and that, in parallel thereto, two or more, notably a number b, of SAR receivers are provided which are respectively assigned to an SAR array antenna comprising respectively a different antenna segment group of said *b* antenna segment groups for reception, said antenna segment groups respectively including two or more antenna segments.

2. The synthetic aperture radar (SAR) system according to claim 1, **characterized in that**, during the transmission phases for emitting the SAR pulses via the various antenna segments of the SAR array antenna, different amplitude distributions can be switched on and, for this purpose, the individual antenna segments can be switched on and off.

3. The synthetic aperture radar (SAR) system according to claim 2, **characterized in that**, during the transmission phases for emitting the SAR pulses, all antenna segments of the SAR array antenna are switched on.

4. The synthetic aperture radar (SAR) system according to any one of the preceding claims, **characterized in that** the SAR array antenna is a passive planar antenna and that, for time-multiplex switching, microwave switches are provided in the connections from the receiver to the antenna segments, so that the provided amplitude distributions can be switched on via the various antenna segments, and individual antenna segments can be switched on and off in the process.

5. The synthetic aperture radar (SAR) system according to any one of claims 1 to 3, **characterized in that** the SAR array antenna is an electronically phase-controlled antenna comprising a plurality of transmission/reception modules and that, in time-multiplex switching, the amplification of the respective receiving portion and/or transmitting portion of the transmission/reception modules is switched to zero in the ranges of the antenna segments for which reception and respectively transmission has to be deactivated so that the provided amplitude distributions can be switched on via the various antenna segments, and individual antenna segments can be switched on and off in the process.

6. The synthetic aperture radar (SAR) system according to any one of the preceding claims, **characterized in that** the SAR array antenna is controlled in such a manner by the time-multiplex switching that the ground strip is illuminated only for a defined time period by a number of SAR pulses (bursts) from an antenna segment and then, for the same defined time period and thus for an identical number of SAR pulses, the process is switched to another antenna segment.

7. The synthetic aperture radar (SAR) system according to any one of the preceding claims, **characterized in that**, in application for SAR-along-track interferometry, antenna segments arranged serially in the moving direction of the carrier platform are switched, i.e. are switched on and off, in the time-multiplex manner (Fig. 2).

8. The synthetic aperture radar (SAR) system according to any one of claims 1 to 6, **characterized in that,** in application for SAR-across-track interferometry, antenna segments arranged transversely to the moving direction of the carrier platform are switched, i.e. are switched on and off, in the time-multiplex manner (Fig. 3).

9. The synthetic aperture radar (SAR) system according to any one of claims 1 to 6, **characterized in that** an SAR array antenna provided for a total of four receiving channels is configured in such a manner that it comprises two antenna segment arrays for reception, arranged serially in the moving direction of the carrier platform and formed by respectively one antenna half and assigned to respectively one receiver, wherein said two antenna segment groups respectively include two antenna segments which are also arranged in the moving direction of the carrier platform and which by the time-multiplex switching are switched on and respectively off in such a manner that, of said total of four antenna segments of the whole SAR array antenna that are arranged serially in the moving direction of the carrier platform, the first and third antenna segments are, from received pulse to received pulse, alternately switched on and off, respectively, in opposition to the second and fourth antenna segments (Fig. 5).

10. The synthetic aperture radar (SAR) system according to any one of claims 1 to 6, **characterized in that** an SAR array antenna provided for a total of three receiving channels is configured in such a manner that it comprises two antenna segment groups for reception, arranged serially in the moving direction of the carrier platform and formed by respectively one antenna half and assigned to respectively one receiver, wherein said two antenna segment groups together include three antenna segments which are also arranged in the moving direction of the carrier platform and which by the time-multiplex switching are switched on and respectively off in such a manner that, of said total of three antenna segments of the whole SAR array antenna that are arranged serially in the moving direction of the carrier platform, the two outer antenna segments are, from received pulse to received pulse, alternately switched on and off, respectively, in opposition to the central antenna segment and the received signals of the two antenna segment groups are added to each other while the central antenna segment is switched on for reception (Fig. 8).

11. The synthetic aperture radar (SAR) system according to any one of claims 1 to 6, **characterized in that** the SAR array antenna forms a main antenna both for transmission and for reception of the SAR pulses and that, apart from said main antenna, additional passive SAR receiving antennae or apertures are provided which are adapted to be switched on and off for use as further antenna segments for generating special amplitude distributions (Fig. 4).

12. The synthetic aperture radar (SAR) system according to any one of claims 1 to 6, **characterized in that**, in the moving direction of the carrier platform, two different SAR-along-track interferometry base line lengths are formed by an array antenna provided for a total of four receiving channels which comprises two antenna segment groups for reception, arranged serially in the moving direction of the carrier platform and formed by respectively one antenna half and assigned to respectively one receiver, wherein said two antenna segment groups respectively include two antenna segments which are also arranged in the moving direction of the carrier platform and which by the time-multiplex switching are switched on and respectively off in such a manner that, for generating a short base line length, during a first received SAR pulse, of said total of four antenna segments of the whole SAR array antenna that are arranged serially in the moving direction of the carrier platform, the second and third antenna segments are switched on and are switched in opposition to the first and fourth antenna segments and, for generating a long base line length, during a second received SAR pulse, the first and fourth antenna segments are switched on and the second and third antenna segments are switched off in opposition thereto (Fig. 6).

13. The synthetic aperture radar (SAR) system according to any one of claims 1 to 6, **characterized in that** an SAR-along-track interferometry base line length and an SAR-across-track interferometry base line length are formed by an SAR array antenna provided for a total of four receiving channels which comprises two antenna segment groups for reception, arranged serially in the moving direction of the carrier platform and formed by respectively one antenna half and assigned to respectively one receiver, wherein said two antenna segment groups respectively include two antenna segments which are arranged transversely to the moving direction of the carrier platform and which by the time-multiplex switching are switched on and respectively off in such a manner that, during a first received SAR pulse, of said total of four antenna segments of the whole SAR array antenna, the two antenna segments arranged on one side of each of said two antenna segment arrays are switched on and the two other antenna segments are switched off and, conversely, during a second received SAR pulse, the two antenna segments arranged on the other side of each of said two antenna segment groups are switched on and the two other antenna segments are switched off (Fig. 7).

14. Use of the synthetic aperture radar (SAR) system according to any one of the preceding claims in a multi-channel SAR array antenna on a satellite carrier platform.

15. Use of the synthetic aperture radar (SAR) system according to any one of claims 1 to 13 in a multi-channel SAR array antenna on a carrier platform formed by an aircraft or a drone.

16. Use of the synthetic aperture radar (SAR) system according to claim 14 or 15 for SAR interferometry.

## Revendications

1. Système de radar à synthèse d'ouverture ou système SAR (de l'allemand Synthetik-Apertur Radar) destiné à reproduire des bandes du sol avec plusieurs canaux de réception, désignés 'a' canaux, dont chaque canal est relié à un segment d'antenne différent d'un groupe d'antennes SAR, comportant 'a' segments d'antenne, qui est monté sur une plate-forme de support mobile au-dessus du sol, sachant que les segments d'antenne du groupe d'antennes SAR comportent des centres de phase séparés pour la réception des signaux d'impulsions reflétées des impulsions SAR émises auparavant par le biais du groupe d'antennes SAR et ainsi chaque canal de réception est associé à un centre de phase différent et les canaux de réception reliés chacun à un des segments d'antenne sont affectés à un récepteur SAR commun et, à la manière d'une commutation de multiplexage temporel, ils sont exploités en tant que canaux de multiplexage temporel dans le récepteur SAR, **caractérisé en ce que,** par le biais des différents segments d'antenne pouvant être activés et désactivés individuellement, des schémas particuliers de réglage d'amplitude du groupe d'antennes SAR peuvent être activés et ainsi des centres de phase du groupe d'antennes SAR peuvent être décalés, sachant que la fréquence de répétition des impulsions (FRI) du système SAR, exploité avec un multiplexage temporel au niveau de la réception, est majorée d'un facteur 'a' en comparaison à un système SAR exploité sans multiplexage temporel, et **en ce qu'**il est prévu en parallèle deux récepteurs SAR ou plus, désignés 'b' récepteurs, qui sont chacun affectés à un groupe différent de segments d'antenne du groupe d'antennes SAR comportant 'b' groupes de segments d'antenne pour la réception, les groupes de segments d'antenne contenant chacun deux segments d'antenne ou plus.

2. Système de radar à synthèse d'ouverture (SAR) selon la revendication 1, **caractérisé en ce que**, durant les phases d'émission destinées à émettre les impulsions SAR, différents réglages d'amplitudes peuvent être activés par le biais des différents segments d'antenne du groupe d'antennes SAR et les différents segments d'antenne peuvent être activés et désactivés dans ce but.

3. Système de radar à synthèse d'ouverture (SAR) selon la revendication 2, **caractérisé en ce que**, durant les phases d'émission destinées à émettre des impulsions SAR, tous les segments d'antenne du groupe d'antennes SAR sont activés.

4. Système de radar à synthèse d'ouverture (SAR) selon l'une quelconque des revendications précédentes, **caractérisé en ce que** le groupe d'antennes SAR est une antenne planaire passive et **en ce que**, pour la commutation du multiplexage temporel, il est prévu des commutateurs hyperfréquences dans les connexions du récepteur aux segments d'antenne de sorte que les réglages d'amplitudes prévus puissent être activés par le biais des différents segments d'antenne et que, ce faisant, les différents segments d'antenne puissent être activés et désactivés.

5. Système de radar à synthèse d'ouverture (SAR) selon l'une quelconque des revendications 1 à 3, **caractérisé en ce que** le groupe d'antennes SAR est une antenne à commande électronique de phase avec une pluralité de modules d'émission-réception et **en ce que**, lors de la commutation du multiplexage temporel, le gain de la partie de réception et/ou d'émission respective des modules d'émission-réception est mis à zéro dans les zones des segments d'antenne à désactiver au niveau de la réception respectivement de l'émission de sorte que les réglages d'amplitudes prévus puissent être activés par le biais des différents segments d'antenne et que, ce faisant, les différents segments d'antenne puissent être activés et désactivés.

6. Système de radar à synthèse d'ouverture (SAR) selon l'une quelconque des revendications précédentes, **caractérisé en ce que** le réseau antennaire SAR est commandé au moyen de la commutation du multiplexage temporel de manière telle que la bande de sol ne soit « illuminée » que pendant un temps déterminé avec un certain nombre d'impulsions SAR (rafales) par un segment d'antenne et qu'ensuite pour le même temps déterminé et ainsi pour un même nombre d'impulsions SAR, il y ait une commutation sur un autre segment d'antenne.

7. Système de radar à synthèse d'ouverture (SAR) selon l'une quelconque des revendications précédentes, **caractérisé en ce que**, en cas d'utilisation pour une interférométrie SAR le long de la trace, des segments d'antenne alignés l'un à côté de l'autre dans la direction du déplacement de la plate-forme de support sont commutés dans le multiplexage temporel, c'est-à-dire sont activés et désactivés (figure 2).

8. Système de radar à synthèse d'ouverture (SAR) selon l'une quelconque des revendications 1 à 6, **caractérisé en ce que**, en cas d'utilisation pour une interférométrie SAR en travers de la trace des segments d'antenne disposés transversalement à la direction de déplacement de la plate-forme de support sont commutés dans le multiplexage temporel, c'est-à-dire sont activés et désactivés (figure 3).

9. Système de radar à synthèse d'ouverture (SAR) selon l'une quelconque des revendications 1 à 6, **caractérisé en ce qu'**un groupe d'antennes SAR prévu pour au total quatre canaux de réception est formé de manière telle qu'il comporte pour la réception deux groupes de segments d'antenne alignés l'un à côté de l'autre dans la direction de déplacement de la plate-forme de support, formés chacun par une moitié d'antenne et affectés chacun à un récepteur, sachant que ces deux groupes de segments d'antenne contiennent chacun deux segments d'antenne également disposés dans la direction de déplacement de la plate-forme de support qui sont activés respectivement désactivés par la commutation du multiplexage temporel de sorte que, parmi les au total quatre segments d'antenne de tout le groupe d'antennes SAR alignés l'un à côté de l'autre dans la direction de déplacement de la plate-forme de support, le premier et le troisième segments placés à l'opposé des deuxième et quatrième segments soient activés respectivement désactivés en alternance d'une impulsion reçue à l'autre (figure 5).

10. Système de radar à synthèse d'ouverture (SAR) selon l'une quelconque des revendications 1 à 6, **caractérisé en ce qu'**un groupe d'antennes SAR prévu pour au total trois canaux de réception est formé de manière telle qu'il comporte pour la réception deux groupes de segments d'antenne alignés l'un à côté de l'autre dans la direction de déplacement de la plate-forme de support, formés chacun par une moitié d'antenne et affectés chacun à un récepteur, sachant que ces deux groupes de segments d'antenne contiennent ensemble trois segments d'antenne, disposés également dans la direction de déplacement de la plate-forme de support, qui sont activés respectivement désactivés par la commutation du multiplexage temporel de sorte que, parmi les au total trois segments d'antenne de tout le groupe d'antennes SAR disposés l'un à côté de l'autre dans la direction de déplacement de la plate-forme de support, les deux segments placés aux extrémités opposées du segment au milieu soient activés respectivement désactivés en alternance d'une impulsion reçue sur l'autre et que les signaux reçus des deux groupes de segments d'antenne soient additionnés lorsque le segment d'antenne au milieu est activé pour la réception (figure 8).

11. Système de radar à synthèse d'ouverture (SAR) selon l'une quelconque des revendications 1 à 6, **caractérisé en ce que** le groupe d'antennes SAR forme une antenne principale aussi bien pour émettre que recevoir des impulsions SAR et **en ce que**, en plus de cette antenne principale, sont prévues des antennes ou ouvertures de réception SAR passives supplémentaires qui peuvent être activées ou désactivées en tant qu'autres segments d'antenne afin de générer des réglages d'amplitudes spéciaux (figure 4).

12. Système de radar à synthèse d'ouverture (SAR) selon l'une quelconque des revendications 1 à 6, **caractérisé en ce que,** dans la direction de déplacement de la plate-forme de support, deux différentes longueurs de ligne de base d'interférométrie le long de la trace sont formées par un groupe d'antennes SAR prévu pour au total quatre canaux de réception, lequel réseau comporte pour la réception deux groupes de segments d'antenne alignés l'un à côté de l'autre dans la direction de déplacement de la plate-forme de support, formés chacun par une moitié d'antenne et affectés chacun à un récepteur, sachant que ces deux groupes de segments d'antenne contiennent chacun deux segments d'antenne, disposés également dans la direction de déplacement de la plate-forme de support, qui sont activés et désactivés par la commutation du multiplexage temporel de sorte que, parmi les au total quatre segments d'antenne de tout le groupe d'antennes SAR disposés l'un à côté de l'autre dans la direction de déplacement de la plate-forme de support, les deuxième et troisième segments d'antenne soient activés et montés à l'opposé des premier et quatrième segments d'antenne pour générer une courte longueur de ligne de base durant une première impulsion SAR reçue et de sorte que les premier et quatrième segments d'antenne soient activés et à l'opposé de cela, les deuxième et troisième segments d'antenne soient désactivés (figure 6) pour générer une grande longueur de ligne de base durant une deuxième impulsion SAR reçue.

13. Système de radar à synthèse d'ouverture (SAR) selon l'une quelconque des revendications 1 à 6, **caractérisé en ce qu'**une ligne de base d'une interférométrie SAR le long de la trace et une ligne de base d'interférométrie SAR en travers de la trace sont formées par un groupe d'antennes SAR, prévu pour au total quatre canaux de réception, qui comporte pour la réception deux groupes de segments d'antenne disposés l'un à côté de l'autre dans la direction de déplacement de la plate-forme de support, formés chacun d'une moitié d'antenne et affectés chacun à un récepteur, sachant que ces deux groupes de segments d'antenne contiennent chacun deux segments d'antenne, disposés transversalement à la direction de déplacement de la plate-forme de support, qui sont activés respectivement désactivés par la commutation du multiplexage temporel de sorte que, parmi les au total quatre segments d'antenne de tout le groupe d'antennes SAR, durant une première impulsion SAR reçue, les deux segments d'antenne disposés sur un côté de chacun des deux groupes de segments d'antenne soient activés et les deux autres segments d'antenne soient désactivés et qu'à l'inverse de cela, durant une deuxième impulsion SAR reçue, les deux segments d'antenne disposés sur l'autre côté de chacun des deux groupes de segments d'antenne soient activés et que les deux autres segments d'antenne soient désactivés (figure 7).

14. Utilisation du système de radar à synthèse d'ouverture (SAR) selon l'une quelconque des revendications précédentes avec un groupe d'antennes SAR à plusieurs canaux sur une plate-forme de support de satellite.

15. Utilisation du système de radar à synthèse d'ouverture (SAR) selon l'une quelconque des revendications 1 à 13 avec un groupe d'antennes SAR à plusieurs canaux sur une plate-forme de support formée par un avion ou un drone.

16. Utilisation du système de radar à synthèse d'ouverture (SAR) selon la revendication 14 ou 15 pour une interférométrie SAR.
